# NEW EUROPEAN PATENT SPECIFICATION

(11) **EP 3 947 554 B2**
(45) Date of publication and mention of the opposition decision: **14.10.2026**
(45) Mention of the grant of the patent: 03.05.2023
(21) Application number: 20713298.6
(22) Date of filing: 26.03.2020
(51) Int. Cl.: C08L 23/12

(54) **COMPATIBILIZATION OF RECYCLED POLYETHYLENE-POLYPROPYLENE BLENDS**
KOMPATIBILISIERUNG VON RECYCELTEN POLYETHYLEN-POLYPROPYLEN-MISCHUNGEN
COMPATIBILIZATION DE MÉLANGES POLYÉTHYLÈNE-POLYPROPYLÈNE RECYCLÉS

(30) Priority: 29.03.2019 EP 19166174
(43) Date of publication of application: 09.02.2022
(73) Proprietor: Borealis GmbH, 1020 Vienna (AT)
(72) Inventor: KAHLEN, Susanne, 4021 Linz (AT); BRAUN, Hermann, 4021 Linz (AT); LIU, Yi, 4021 Linz (AT); GAHLEITNER, Markus, 4021 Linz (AT); HUBNER, Gerhard, 4021 Linz (AT)
(74) Representative: Maiwald GmbH
(86) International application number: PCT/EP2020/058578
(87) International publication number: WO 2020/201020

(56) References cited:
- EP-A1- 0 254 599
- WO-A1-2015/169690
- WO-A1-2015/169690
- WO-A1-2018/206353
- JP-A- 2001 114 957
- US-A- 3 632 674

## Description

The present invention is directed to a polyethylene-polypropylene composition comprising a blend (A) being a recycled material, said blend comprising polypropylene and polyethylene, and a compatibilizer (B) being a C₂C₃C₄ terpolymer. Further, the present invention is directed to an article comprising said polyethylene-polypropylene composition and a process for preparing said polyethylene-polypropylene composition.

Mechanical recycling or polymer waste from various collection systems is the main target of present developments in the field. Mixed recycling of chemically similar polymers, like styrene homo- and copolymers or polyamides, is often seen as one way out of the sorting dilemma limiting the process. Polypropylene and polyethylene are certainly candidates for such mixtures, but their inherently limited compatibility and miscibility will normally make the application of some kind of compatibilization mandatory in order to obtain compositions with good mechanical performance.

It is well known in the art that a higher impact strength can be achieved through the addition of elastomers acting as compatibilizers such as ethylene-propylene rubbers which, however, limit the stiffness of the resulting compositions. Moreover, many of these elastomers are only available as higher molecular weight versions or in non-pelletized form, the latter requiring specific mixing equipment. WO 2015/169690 provides an alternative approach through the use of heterophasic ethylene-propylene copolymers as compatibilizers. Said heterophasic copolymers comprise a crystalline matrix and an elastomeric component which limits the stiffness loss but at the same time requires the addition of rather high amounts.

Therefore, it is an object of the present invention to provide a composition comprising recycled polypropylene and polyethylene featured by a high impact strength while the stiffness also remains on a high level.

Accordingly, the present invention is directed to a polyethylene-polypropylene composition, obtainable by blending as defined in claim 1

According to one embodiment of the present invention, the C₂C₃C₄ terpolymer has a melt flow rate MFR₂ (230 °C, 2.16 kg) determined according to ISO 1133 in the range of 2.0 to 40.0 g/10 min, preferably in the range of 3.0 to 38.0 g/10 min, more preferably in the range of 3.5 to 35.0 g/10 min, still more preferably in the range of 4.0 to 30.0 g/10 min.

According to another embodiment of the present invention, the weight ratio between the blend (A) and the compatibilizer (B) is in the range of 99:1 to 5:1, preferably in the range of 49:1 to 7:1, more preferably in the range of 32:1 to 8:1, still more preferably in the range of 19:1 to 9:1.

According to one embodiment of the present invention, the C₂C₃C₄ terpolymer has a melting temperature Tm determined according to ISO 11357 below 180°C, preferably in the range of 120 to below 180 °C, more preferably in the range of 140 to 170 °C, still more preferably in the range of 150 to 165 °C.

According to a further embodiment of the present invention, the C₂C₃C₄ terpolymer has a glass transition temperature Tg below -5 °C, preferably in the range of -30 to below -5 °C, more preferably in the range of -27 to -10°C, still more preferably the range of -25 to -12 °C.

According to a first embodiment of the present invention, blend (A) has a content of limonene as determined by using solid phase microextraction (HS-SPME-GC-MS) of from 1 ppm to 100 ppm, preferably from 1 ppm to 50 ppm, more preferably from 2 ppm to 50 ppm, most preferably from 3 ppm to 35 ppm. In a second embodiment, blend (A) has a content of limonene as determined by using solid phase microextraction (HS-SPME-GC-MS) of from 0.10 ppm to less than 1 ppm, preferably 0.10 to less than 0.85 ppm, most preferably 0.10 to less than 0.60 ppm.

According to a further embodiment of the present invention, blend (A) has a relative amount of units derived from ethylene of greater than 20 wt.-%, based on the overall weight of blend (A).

It is especially preferred that wherein blend (A) contains
i) up to 6.0 wt.-%, preferably 0.1 to 6.0 wt.-% polystyrene, and/or
ii) up to 3 wt.-%, preferably 0.1 to 3 wt.-% talc, and/or
iii) up to 5.0 wt.-%, preferably 0.2 to 5.0 wt.-% polyamide, and/or
iv) up to 3 wt.-%, preferably 0.1 to 3 wt.-% chalk,
based on the overall weight of blend (A).

According to one embodiment of the present invention, the polyethylene-polypropylene composition has a melt flow rate MFR₂ (230 °C, 2.16 kg) determined according to ISO 1133 in the range of 0.1 to 50.0 g/10 min.

According to one embodiment of the present invention, the polyethylene-polypropylene composition has a Charpy notched impact strength determined according to ISO 179 / 1eA at 23 °C of at least 6.0 kJ/m², preferably in the range of 6.0 to 15.0 kJ/m², more preferably in the range of 7.0 to 10.0 kJ/m², still more preferably in the range of 8.0 to 9.0 kJ/m².

According to another embodiment of the present invention, the polyethylene-polypropylene composition has a tensile modulus determined according to ISO 527-2 of at least 600 MPa, preferably in the range of 600 to 830 MPa, more preferably in the range of 620 to 800 MPa, still more preferably in the range of 640 to 760 MPa.

The present invention is further directed to an article, comprising the polyethylene-polypropylene composition described above.

The present invention is also directed to a process for preparing the polyethylene-polypropylene composition described above, comprising the steps of
a) providing the blend (A) in an amount of 85.0 to 99.0 wt.-%, based on the overall weight of the polyethylene-polypropylene composition,
b) providing the compatibilizer (B) in an amount of 1.0 to 15.0 wt.-%, based on the overall weight of the polyethylene-polypropylene composition,
c) melting and mixing the blend of blend (A) and the compatibilizer (B), optionally in the presence of 0 to 1.0 wt.-% of a stabilizer or a mixture of stabilizers, and
d) optionally pelletizing.

It is especially preferred that the process includes the pelletizing step d).

In the following, the present invention is described in more detail. **The polyethylene-polypropylene composition**

As outlined above, the present invention is directed to a polyethylene-polypropylene composition comprising a blend (A) of polypropylene and polyethylene and a compatibilizer (B) being a C₂C₃C₄ terpolymer as defined in claim 1.

In particular, the inventive polyethylene-polypropylene composition is obtainable by blending
a) 85.0 to 99.0 wt.-%, preferably 86.0 to 98.0 wt.-%, more preferably 87.0 to 98.0 wt.-%, still more preferably 88.0 to 95.0 wt.-%, yet more preferably 88.0 to 93.0 wt.-%, like 88.0 to 90.0 wt.-% of blend (A), and
b) 1.0 to 15.0 wt.-%, preferably 2.0 to 14.0 wt.-%, more preferably 3.0 to 13.0 wt.-%, still more preferably 5.0 to 12.0 wt.-%, yet more preferably 7.0 to 12.0 wt.-%, like 10.0 to 12.0 wt.-%, of the compatibilizer (B),
based on the overall weight of the polyethylene-polypropylene composition.

The polyethylene-polypropylene composition according to the present invention may further comprise additives (AD).

Accordingly, it is preferred that the inventive polyethylene-polypropylene composition is obtainable by blending
a) 85.0 to 99.0 wt.-%, preferably 86.0 to 98.0 wt.-%, more preferably 87.0 to 98.0 wt.-%, still more preferably 88.0 to 95.0 wt.-%, yet more preferably 88.0 to 93.0 wt.-%, like 88.0 to 90.0 wt.-% of blend (A),
b) 1.0 to 15.0 wt.-%, preferably 2.0 to 14.0 wt.-%, more preferably 3.0 to 13.0 wt.-%, still more preferably 5.0 to 12.0 wt.-%, yet more preferably 7.0 to 12.0 wt.-%, like 10.0 to 12.0 wt.-% of the compatibilizer (B), and
c) optionally 0.001 to 3.0 wt.-%, more preferably 0.01 to 2.0 wt.-%, like 0.1 to 1.0 wt.-% of additives (AD),
based on the overall weight of the polyethylene-polypropylene composition.

The additives (AD) are described in more detail below.

Further, it is preferred that the weight ratio between the blend (A) and the compatibilizer (B) is in the range of 99:1 to 5:1, more preferably in the range of 49:1 to 7:1, still more preferably in the range of 32:1 to 8:1, yet more preferably in the range of 19:1 to 9:1, like 9:1.

The polyethylene-polypropylene composition according to the invention preferably has a melt flow rate MFR₂ (230 °C, 2.16 kg) determined according to ISO 1133 in the range of 0.1 to 50.0 g/10 min, more preferably in the range of 1.0 to 20.0 g/10 min, still more preferably in the range of 2.0 to 15.0 g/10 min, like in the range of 4.0 to 10.0 g/10 min.

As outlined above, it is appreciated that the polyethylene-polypropylene composition according to the invention is featured by a good impact strength without compromising the stiffness behavior.

Accordingly, it is preferred that the inventive polyethylene-polypropylene composition has a Charpy notched impact strength determined according to ISO 179 / 1eA at 23 °C of at least 6.0 kJ/m², more preferably in the range of 6.0 to 15.0 kJ/m², still more preferably in the range of 7.0 to 10.0 kJ/m², like in the range of 8.0 to 9.0 kJ/m².

Additionally, it is preferred that the inventive polyethylene-polypropylene composition has a tensile modulus determined according to ISO 527-2 of at least 600 MPa, more preferably in the range of 600 to 830 MPa, still more preferably in the range of 620 to 800 MPa, like in the range of 640 to 760 MPa.

In the following, the blend (A) of polypropylene and polyethylene and the compatibilizer (B) being a C₂C₃C₄ terpolymer are described in more detail.

### The blend (A)

The polyethylene-polypropylene composition according to the present invention comprises from 85.0 to 99.0 wt.-% of blend (A). It is the essence of the present invention that blend (A) is obtained from a recycled waste stream. Blend (A) is recycled post-consumer waste-.

For the purposes of the present description and of the subsequent claims, the term "recycled waste" is used to indicate a material recovered from both post-consumer waste and industrial waste, as opposed to virgin polymers. Post-consumer waste refers to objects having completed at least a first use cycle (or life cycle), i.e. having already served their first purpose; while industrial waste refers to manufacturing scrap, which does not normally reach a consumer.

The term "virgin", on the other hand, denotes the newly produced materials and/or objects prior to their first use, which have not already been recycled.

Many different kinds of polyethylene or polypropylene can be present in "recycled waste".

In particular, the polypropylene fraction can comprise: isotactic propylene homopolymers, random copolymers of propylene with ethylene and/or C4 - C8 α-olefins, heterophasic copolymers comprising a propylene homopolymer and/or at least one C2 or C4 - C8 α-olefin copolymer and an elastomeric fraction comprising copolymers of ethylene with propylene and/or a C4 - C8 α-olefin, optionally containing minor amounts of a diene.

Likewise, the polyethylene fraction can comprise ethylene homopolymers or random copolymers of ethylene with propylene and/or C4 - C8 α-olefins. The polyethylene fraction of the recycled material can comprise recycled highdensity polyethylene (rHDPE), recycled medium-density polyethylene (rMDPE), recycled low-density polyethylene (rLDPE), recycled linear low density polyethylene (rLLDPE) and the mixtures thereof. In a certain embodiment, the recycled material is high density PE with an average density of greater than 0.7 g/cm³, preferably greater than 0.75 g/cm³, most preferably greater than 0.8 g/cm³.

The term "recycled material" such as used herein denotes materials reprocessed from "recycled waste".

A polymer blend is a mixture of two or more polymeric components. In general, the blend can be prepared by mixing the two or more polymeric components. Suitable mixing procedures known in the art are post-polymerization blending procedures. Post-polymerization blending can be dry blending of polymeric components such as polymer powders and/or compounded polymer pellets or melt blending by melt mixing the polymeric components.

The polypropylene / polyethylene weight ratio in the blend (A) is in the range of from 7:3 to 3:7.

Preferably, blend (A) is obtained from recycled waste by means of plastic recycling processes known in the art. Such recyclates are commercially available, e.g. from Corepla (Italian Consortium for the collection, recovery, recycling of packaging plastic wastes), Resource Plastics Corp. (Brampton, ON), Kruschitz GmbH, Plastics and Recycling (AT), Vogt Plastik GmbH (DE), Mtm Plastics GmbH (DE) etc. None exhaustive examples of polyethylene rich recycled materials include: DIPOLEN S (Mtm Plastics GmbH), food grade rHDPE (BIFFA PLC) and a range of polyethylene rich materials, such as e.g. HD-LM02041 from PLASgran Ltd.

In a certain preferred embodiment, the recycled polyethylene rich material is DIPOLEN (Mtm Plastics GmbH), such as DIPOLEN S or DIPOLEN H, DIPOLEN PP or Dipolen SP, preferably DIPOLEN S. DIPOLEN is obtained from domestic waste streams (i.e. it is a product of domestic recycling) for example the "yellow bag" recycling system, which operates in some parts of Germany.

The combined polypropylene and polyethylene fractions of blend (A) may have a relative amount of units derived from ethylene of greater than 20 wt.-%, preferably greater than 27 wt.-%, more preferably greater than 30 wt.-%, still more preferably greater than 35 wt.-%, most preferably greater than 40 wt.-% with respect to the total weight of blend (A).

In addition, the combined polypropylene and polyethylene fractions of blend (A) may have a relative amount of units derived from propylene of greater than 30 wt.-%, but less than 70 wt.-%, with respect to the total weight of blend (A).

According to a first embodiment of the present invention, blend (A) preferably has a content of limonene as determined using solid phase microextraction (HS-SPME-GC-MS) of from 1 ppm to 100 ppm, preferably from 1 ppm to 50 ppm, more preferably from 2 ppm to 50 ppm, most preferably from 3 ppm to 35 ppm. Limonene is conventionally found in recycled polyolefin materials and originates from packaging applications in the field of cosmetics, detergents, shampoos and similar products. Therefore, blend (A) contains limonene, when blend (A) contains material that originates from such types of domestic waste streams. In a second embodiment of the present invention, blend (A) has a content of limonene as determined by using solid phase microextraction (HS-SPME-GC-MS) of from 0.10 ppm to less than 1 ppm, preferably 0.10 to less than 0.85 ppm, most preferably 0.10 to less than 0.60 ppm. Blend (A) according to the second embodiment can be prepared by subjecting blend (A) according to the first embodiment to washing and/or aeration. Washing can be effected by industrial washers such as provided by Herbold Meckesheim GmbH. Depending on the origin of the waste stream, several washing cycles may be necessary. Various aeration processes such as described in US 5,767,230 are also known in the art. The process as described in US 5,767,230 is preferably combined with a washing stage as described above.

The fatty acid content is yet another indication of the recycling origin of blend (A). Due to the recycling origin blend (A) may also contain:
i) organic fillers, and/or
ii) inorganic fillers, and/or
iii) additives
in amounts of up to 4 wt.-% with respect to the weight of blend (A).

Blend (A) preferably contains
(i) up to 6.0 wt.-% polystyrene; and/or
(ii) up to 3 wt.-% talc; and/or
(iii) up to 5.0 wt.-% polyamide; and/or
(iv) up to 3 wt.-% chalk,
based on the overall weight of blend (A).

Blend (A) typically contains
(i) 0.1 to 6.0 wt.-% polystyrene; and/or
(ii) 0.1 to 3 wt.-% talc; and/or
(iii) 0.2 to 5.0 wt.-% polyamide; and/or
(iv) 0.1 to 3 wt.-% chalk,
based on the overall weight of blend (A).

Blend (A) may further contain polyethylene terephthalate (PET) and polyvinylchloride (PVC). Preferably, blend (A) further contains
(vi) up to 5.0 wt.-%, more preferably 0.2 to 5.0 wt.-% polyethylene terephthalate (PET), and/or
(vii) up to 5.0 wt.-%, more preferably 0.2 to 5.0 wt.-% polyvinylchloride (PVC), based on the overall weight of blend (A).

### The compatibilizer (B)

The inventive polyethylene-polypropylene composition further comprises a compatibilizer (B).

A "compatibilizer" is a substance in polymer chemistry which is added to an immiscible blend of polymers in order to increase its stability.

The compatibilizer (B) according to the present invention is a C₂C₃C₄ terpolymer, i.e. a copolymer of propylene, ethylene and 1-butene, having an ethylene content in the range of 2.0 to 15.0 wt.-% and 1-butene content in the range of 5.0 to 30.0 wt.-%.

Preferably, said C₂C₃C₄ terpolymer has an ethylene content in the range of 3.0 to 12.0 wt.-%, more preferably in the range of 4.0 to 10.0 wt.-%, like in the range of 4.5 to 9.0 wt.-%, based on the overall weight of the C₂C₃C₄ terpolymer.

Additionally or alternatively, it is preferred that the C₂C₃C₄ terpolymer has a 1-butene content in the range of 5.5 to 27.0 wt.-%, more preferably in the range of 6.0 to 23.0 wt.-%, like in the range of 7.0 to 20.0 wt.-%, based on the overall weight of the C₂C₃C₄ terpolymer. Further, it is preferred that the C₂C₃C₄ terpolymer has a melt flow rate MFR₂ (230°C, 2.16 kg) determined according to ISO 1133 in the range of 2.0 to 40.0 g/10 min, more preferably in the range of 3.0 to 38.0 g/10 min, still more preferably in the range of 3.5 to 35.0 g/10 min, like in the range of 4.0 to 30.0 g/10 min.

The C₂C₃C₄ terpolymer preferably has a melting temperature Tm determined according to ISO 11357 below 180°C, more preferably in the range of 120 to below 180 °C, still more preferably in the range of 140 to 170 °C, like in the range of 150 to 165 °C.

Additionally, it is preferred that the C₂C₃C₄ terpolymer has a glass transition temperature below -5 °C, more preferably in the range of -30 to below -5 °C, still preferably in the range of -27 to -10°C, like in the range of -25 to -12 °C.

The compatibilizer (B) has a density determined according to ISO 1183 equal or below 880 kg/m³, more preferably in the range of 850 to 875 kg/m³, still more preferably in the range of 855 to 872 kg/m³, like in the range of 860 to 870 kg/m³.

It is preferred that the compatibilizer (B) is a C₂C₃C₄ terpolymer known in the art, for example a C₂C₃C₄ terpolymer of the TAFMER series commercially available from Mitsui.

### The additives (AD)

As indicated above, the polyethylene-polypropylene composition according to the invention may contain additives.

In particular, the polyethylene-polypropylene composition of the present invention may contain up to 1.0 wt.-% of a stabilizer or a mixture of stabilizers. Preferably stabilizers are contained in an amount of 0.1 to 1.0 wt.-%, based on the total weight of the polyethylene-polypropylene composition.

Stabilizers are well known in the art and can be for example antioxidants, anti-acids, antiblocking agents, anti-UV's, nucleating agents or antistatic agents.

Examples of antioxidants which are commonly used in the art, are sterically hindered phenols (such as CAS No. 6683-19-8, also sold as Irganox 1010 FF^{™} by BASF, or Irganox 225^{™} by BASF), phosphorous based antioxidants (such as CAS No. 31570-04-4, also sold as Hostanox PAR 24 (FF)^{™} by Clariant, or Irgafos 168 (FF)TM by BASF), sulphur based antioxidants (such as CAS No. 693- 36-7, sold as Irganox PS-802 FL^{™} by BASF), nitrogen-based antioxidants (such as 4,4'- bis(1,1'-dimethylbenzyl)diphenylamine), or antioxidant blends.

Anti-acids are also commonly known in the art. Examples are calcium stearates, sodium stearates, zinc stearates, magnesium and zinc oxides, synthetic hydrotalcite (e.g. SHT, CAS-No. 11097-59-9), lactates and lactylates, as well as calcium stearate (CAS No. 1592-23-0) and zinc stearate (CAS No. 557-05-1);

Common antiblocking agents are natural silica such as diatomaceous earth (such as CAS No. 60676-86-0 (SuperfFloss^{™}), CAS-No. 60676-86-0 (SuperFloss E^{™}), or CAS-No. 60676-86-0 (Celite 499^{™})), synthetic silica (such as CAS-No. 7631-86-9, CAS-No. 7631-86-9, CAS-No. 7631-86-9, CAS-No. 7631-86-9, CAS-No. 7631-86-9, CAS-No. 7631-86-9, CAS-No. 112926-00-8, CAS-No. 7631-86-9, or CAS-No. 7631-86-9), silicates (such as aluminium silicate (Kaolin) CAS-no. 1318-74-7, sodium aluminum silicate CAS-No. 1344-00-9, calcined kaolin CAS-No. 92704-41-1, aluminum silicate CAS-No. 1327-36-2, or calcium silicate CAS-No. 1344-95-2), synthetic zeolites (such as sodium calcium aluminosilicate hydrate CAS-No. 1344-01-0, CAS-No. 1344-01-0, or sodium calcium aluminosilicate, hydrate CAS-No. 1344-01-0).

Anti-UVs are, for example, Bis-(2,2,6,6-tetramethyl-4-piperidyl)-sebacate (CAS - No. 52829-07-9, Tinuvin 770); 2-hydroxy-4-n-°Ctoxy-benzophenone (CAS-No. 1843-05-6, Chimassorb 81).

Nucleating agents like sodium benzoate (CAS No. 532-32-1); 1,3:2,4-bis(3,4-dimethylbenzylidene)sorbitol (CAS 135861-56-2, Millad 3988).

Suitable antistatic agents are, for example, glycerol esters (CAS No. 97593-29-8) or ethoxylated amines (CAS No. 71786-60-2 or 61791-31-9) or ethoxylated amides (CAS No. 204-393-1).

Usually these stabilizers are added in quantities of 100-2.000 ppm for each individual component of the polymer

The polyethylene-polypropylene composition preferably contains between 1.0 and 2.0 wt.-% PO ash.

### The process

The process according to the present invention for providing a polyethylene-polypropylene composition comprises the steps of:
a) providing the blend (A) in an amount of 85.0 to 99.0 wt.-%, based on the overall weight of the polyethylene-polypropylene composition,
b) providing the compatibilizer (B) in an amount of 1.0 to 15.0 wt.-%, based on the overall weight of the polyethylene-polypropylene composition,
c) melting and mixing the blend of blend (A) and the compatibilizer (B), optionally in the presence of 0 to 1.0 wt.-% of a stabilizer or a mixture of stabilizers, and
d) optionally pelletizing.

It is especially preferred that the process includes the pelletizing step d).

Accordingly, it is preferred that the process for providing the polyethylene-polypropylene composition comprises the steps of
a) providing the blend (A) in an amount of 85.0 to 99.0 wt.-%, based on the overall weight of the polyethylene-polypropylene composition,
b) providing the compatibilizer (B) in an amount of 1.0 to 15.0 wt.-%, based on the overall weight of the polyethylene-polypropylene composition,
c) melting and mixing the blend of blend (A) and the compatibilizer (B), optionally in the presence of 0 to 1.0 wt.-% of a stabilizer or a mixture of stabilizers, and
d) pelletizing.

All preferred aspects, definitions and embodiments as described above shall also hold for the process.

### The use

All preferred aspects, definitions and embodiments as described above shall also hold for the use.

### Experimental Section

The following Examples are included to demonstrate certain aspects and embodiments of the invention as described in the claims. It should be appreciated by those of skill in the art, however, that the following description is illustrative only and should not be taken in any way as a restriction of the invention.

### Test Methods

The **tensile modulus** (TM) was measured according to ISO 527-2 (cross head speed = 1 mm/min for determination of the modulus, thereafter switching to 50 mm/min until break at 23 °C) using injection moulded specimens as described in EN ISO 5247-2 (dog bone shape, 4 mm thickness). The measurement was done after 96 h conditioning time of the specimen.

The **impact strength** was determined as Charpy Notched Impact Strength (NIS) according to ISO 179-1 eA at +23 °C on injection moulded specimens of 80 × 10 × 4 mm prepared according to EN ISO 1873-2. According to this standard samples are tested after 96 hours.

### Comonomer content poly(propylene-co-ethylene-co-butene)

Quantitative ¹³C{¹H} NMR spectra recorded in the molten-state using a Bruker Advance III 500 NMR spectrometer operating at 500.13 and 125.76 MHz for ¹H and ¹³C respectively. All spectra were recorded using a ¹³C optimised 7 mm magic-angle spinning (MAS) probe head at 180°C using nitrogen gas for all pneumatics. Approximately 200 mg of material was packed into a 7 mm outer diameter zirconia MAS rotor and spun at 4.5 kHz. This setup was chosen primarily for the high sensitivity needed for rapid identification and accurate quantification {1, 2, 6} Standard single-pulse excitation was employed utilising the NOE at short recycle delays {3, 1} and the RS-HEPT decoupling scheme {4, 5}. A total of 1024 (1k) transients were acquired per spectra.

Quantitative ¹³C{¹H} NMR spectra were processed, integrated and relevant quantitative properties determined from the integrals. All chemical shifts are internally referenced to the methyl isotactic pentad (*mmmm*) at 21.85 ppm. Characteristic signals corresponding to regio defects were not observed {11}. The amount of propene was quantified based on the main Sαα methylene sites at 44.1 ppm: $Ptotal = {I}_{Sαα}$

Characteristic signals corresponding to the incorporation of 1-butene were observed and the comonomer content quantified in the following way. The amount isolated 1-butene incorporated in PPBPP sequences was quantified using the integral of the αB2 sites at 44.1 ppm accounting for the number of reporting sites per comonomer: $B = {I}_{αB 2 / 2}$

The amount consecutively incorporated 1-butene in PPBBPP sequences was quantified using the integral of the ααB2 site at 40.5 ppm accounting for the number of reporting sites per comonomer: $BB = 2 * {I}_{ααB 2}$

The total 1-butene content was calculated based on the sum of isolated and consecutively incorporated 1-butene: $Btotal = B + BB$

The total mole fraction of 1-butene in the polymer was then calculated as: fB = (Btotal / (Etotal + Ptotal + Btotal))

Characteristic signals corresponding to the incorporation of ethylene were observed and the comonomer content quantified in the following way. The amount isolated ethylene incorporated in PPEPP sequences was quantified using the integral of the Sαγ sites at 37.9 ppm accounting for the number of reporting sites per comonomer: $E = {I}_{Sαγ} / 2$

With no sites indicative of consecutive incorporation observed the total ethylene comonomer content was calculated solely on this quantity: $Etotal = E$

The total mole fraction of ethylene in the polymer was then calculated as: $fE = \left(Etotal/\left(Etotal+Ptotal+Btotal\right)\right)$

The mole percent comonomer incorporation was calculated from the mole fractions: $B \left[mol%\right] = 100 * fB$ $E \left[mol%\right] = 100 * fE$

The weight percent comonomer incorporation was calculated from the mole fractions: $B \left[wt%\right] = 100 * \left(fB*56.11\right) / \left(\left(fE*28.05\right)+\left(fB*56.11\right)+\left(\left(1-\left(fE+fB\right)\right)*42.08\right)\right)$ $E \left[wt%\right] = 100 * \left(fE*28.05\right) / \left(\left(fE*28.05\right)+\left(fB*256.11\right)+\left(\left(1-\left(fE+fB\right)\right)*42.08\right)\right)$

Bibliographic references:
1) Klimke, K., Parkinson, M., Piel, C., Kaminsky, W., Spiess, H.W., Wilhelm, M., Macromol. Chem. Phys. 2006;207:382.
2) Parkinson, M., Klimke, K., Spiess, H.W., Wilhelm, M., Macromol. Chem. Phys. 2007;208:2128.
3) Pollard, M., Klimke, K., Graf, R., Spiess, H.W., Wilhelm, M., Sperber, O., Piel, C., Kaminsky, W., Macromolecules 2004;37:813.
4) Filip, X., Tripon, C., Filip, C., J. Mag. Resn. 2005, 176, 239.
5) Griffin, J.M., Tripon, C., Samoson, A., Filip, C., and Brown, S.P., Mag. Res. in Chem. 2007 45, S1, S198.
6) Castignolles, P., Graf, R., Parkinson, M., Wilhelm, M., Gaborieau, M., Polymer 50 (2009) 2373.
7) Busico, V., Cipullo, R., Prog. Polym. Sci. 26 (2001) 443.
8) Busico, V., Cipullo, R., Monaco, G., Vacatello, M., Segre, A.L., Macromolecules 30 (1997) 6251.
9) Zhou, Z., Kuemmerle, R., Qiu, X., Redwine, D., Cong, R., Taha, A., Baugh, D. Winniford, B., J. Mag. Reson. 187 (2007) 225.
10) Busico, V., Carbonniere, P., Cipullo, R., Pellecchia, R., Severn, J., Talarico, G., Macromol. Rapid Commun. 2007, 28, 1128.
11) Resconi, L., Cavallo, L., Fait, A., Piemontesi, F., Chem. Rev. 2000, 100, 1253.

**Ratio of units derived from C2 and C3:** The ethylene content of blend (A) was determined by quantitative Fourier transform infrared spectroscopy (FTIR) calibrated to results obtained from quantitative ¹³C NMR spectroscopy.

Thin films were pressed to a thickness of between 300 to 500 µm at 190 °C and spectra recorded in transmission mode. Relevant instrument settings include a spectral window of 5000 to 400 wave-numbers (cm⁻¹), a resolution of 2.0 cm⁻¹ and 8 scans.

Quantitative ¹³C{¹H} NMR spectra were recorded in the solution-state using a Bruker Avance III 400 NMR spectrometer operating at 400.15 and 100.62 MHz for ¹H and ¹³C respectively. All spectra were recorded using a ¹³C optimized 10 mm extended temperature probehead at 125°C using nitrogen gas for all pneumatics. Approximately 200 mg of material was dissolved in 3 ml of 1,2-tetrachloroethane-d2 (TCE-d2) along with chromium (III) acetylacetonate (Cr(acac)₃) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatory oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimized tip angle, 1 s recycle delay and a bilevel WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225, Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative ¹³C{¹H} NMR spectra were processed, integrated and relevant quantitative properties determined from the integrals. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed (Cheng, H. N., Macromolecules 17 (1984), 1950) and the ethylene fraction calculated as the fraction of ethylene in the blend with respect to all monomer in the polymer: fE = ( E / ( P + E ) The ethylene fraction was quantified using the method of Wang et. al. (Wang, W-J., Zhu, S., Macromolecules 33 (2000), 1157) through integration of multiple signals across the whole spectral region in the ¹³C{¹H} spectra. This method was chosen for its robust nature and ability to account for the presence of regio-defects when needed. Integral regions were slightly adjusted to increase applicability across the whole range of encountered comonomer contents. The mole percent of ethylene was calculated from the mole fraction: E [mol%] = 100 * fE. The weight percent comonomer incorporation was calculated from the mole fraction: E [wt%] = 100 * ( fE * 28.06 ) / ( (fE * 28.06) + ((1-fE) * 42.08))

### iPP, PE, PS, PA and PE content:

Calibration standards were prepared by blending iPP and HDPE to create a calibration curve. The thickness of the films of the calibration standards were 300 µm. For the quantification of the iPP, PS and PA 6 content in the samples quantitative IR spectra were recorded in the solid-state using a Bruker Vertex 70 FTIR spectrometer. Spectra were recorded on 25x25 mm square films of 50-100 µm thickness prepared by compression moulding at 190°C and 4-6 mPa. Standard transmission FTIR spectroscopy was employed using a spectral range of 4000-400 cm⁻¹, an aperture of 6 mm, a spectral resolution of 2 cm⁻¹, 16 background scans, 16 spectrum scans, an interferogram zero filling factor of 32 and Norton Beer strong apodisation.

The absorption of the band at 1167 cm⁻¹ in iPP is measured and the iPP content is quantified according to a calibration curve (absorption/thickness in cm versus iPP content in weight %).

The absorption of the band at 1601 cm⁻¹ (PS) and 3300 cm⁻¹ (PA6) are measured and the PS and PA6 content quantified according to the calibration curve (absorption/thickness in cm versus PS and PA content in wt %). The PE content is obtained by subtracting iPP, PS and PA6 from 100. The analysis is performed as double determination.

**Talc and chalk content:** measured by Thermogravimetric Analysis (TGA); experiments were performed with a Perkin Elmer TGA 8000. Approximately 10-20 mg of material was placed in a platinum pan. The temperature was equilibrated at 50°C for 10 minutes, and afterwards raised to 950°C under nitrogen at a heating rate of 20 °C/min. The weight loss between ca. 550°C and 700°C (WCO₂) was assigned to CO₂ evolving from CaCO₃, and therefore the chalk content was evaluated as: $Chalk content = 100 / 44 \times {WCO}_{2}$

Afterwards the temperature was lowered to 300°C at a cooling rate of 20 °C/min. Then the gas was switched to oxygen, and the temperature was raised again to 900°C. The weight loss in this step was assigned to carbon black (Wcb). Knowing the content of carbon black and chalk, the ash content excluding chalk and carbon black was calculated as: $Ash content = \left(Ash residue\right) - 56 / 44 \times {WCO}_{2} - Wcb$

Where Ash residue is the weight% measured at 900°C in the first step conducted under nitrogen. The ash content is estimated to be the same as the talc content for the investigated recyclates.

**MFR:** melt flow rates were measured with a load of 2.16 kg (MFR₂) at 230 °C or 190°C as indicated. The melt flow rate is that quantity of polymer in grams which the test apparatus standardized to ISO 1133 extrudes within 10 minutes at a temperature of 230 °C (or 190°C) under a load of 2.16 kg.

The **melting temperature** was determined by means of DSC in accordance with ISO 11357.

The **glass transition temperature Tg** is determined by dynamic mechanical analysis according to ISO 6721-7. The measurements are done in torsion mode on compression moulded samples (40×10×1 mm³) between -100 °C and +150 °C with a heating rate of 2 °C/min and a frequency of 1 Hz.

The **density** was determined according to ISO 1183.

### Limonene content in DIPOLEN

### Measurement

Limonene quantification was carried out using solid phase microextraction (HS-SPME-GC-MS) by standard addition.

50 mg ground samples were weighed into 20 mL headspace vials and after the addition of limonene in different concentrations and a glass-coated magnetic stir bar, the vial was closed with a magnetic cap lined with silicone/PTFE. Micro capillaries (10 pL) were used to add diluted limonene standards of known concentrations to the sample. Addition of 0, 2, 20 and 100 ng equals 0 mg/kg, 0.1 mg/kg, 1 mg/kg and 5 mg/kg limonene, in addition standard amounts of 6.6 mg/kg, 11 mg/kg and 16.5 mg/kg limonene were used in combination with some of the samples tested in this application. For quantification, ion-93 acquired in SIM mode was used. Enrichment of the volatile fraction was carried out by headspace solid phase microextraction with a 2 cm stable flex 50/30 pm DVB/Carboxen/PDMS fibre at 60°C for 20 minutes. Desorption was carried out directly in the heated injection port of a GCMS system at 270°C.

GCMS Parameters:
Column: 30 m HP 5 MS 0.25*0.25
Injector: Splitless with 0.75 mm SPME Liner, 270°C
Temperature program: -10°C ( 1 min)
Carrier gas: Helium 5.0, 31 cm/s linear velocity, constant flow
MS: Single quadrupole, direct interface, 280°C interface temperature
Acquisition: SIM scan mode
Scan parameter: 20-300 amu
SIM Parameter: m/Z 93, 100 ms dwell time

**Table 1: Limonene content in DIPOLEN (Blend (A))**

| | |
|---|---|
| | Limonene [mg/ kg] |
| Sample | HS-SPME-GC-MS^{[1]} |
| Dipolen S | 31.5±2.6 |
| ^{[1]}Headspace Soldiphase Microextraction. Materials available from mtm plastics GmbH, according to 2018 specifications. | |

### Total free fatty acid content

Fatty acid quantification was carried out using headspace solid phase micro-extraction (HS-SPME-GC-MS) by standard addition.

50 mg ground samples were weighed in 20 mL headspace vial and after the addition of limonene in different concentrations and a glass coated magnetic stir bar the vial was closed with a magnetic cap lined with silicone/PTFE. 10 µL Micro-capillaries were used to add diluted free fatty acid mix (acetic acid, propionic acid, butyric acid, pentanoic acid, hexanoic acid and octanoic acid) standards of known concentrations to the sample at three different levels. Addition of 0, 50, 100 and 500 ng equals 0 mg/kg, 1 mg/kg, 2 mg/kg and 10 mg/kg of each individual acid. For quantification ion 60 acquired in SIM mode was used for all acids except propanoic acid, here ion 74 was used.

GCMS Parameter:
Column: 20 m ZB Wax plus 0.25*0.25
Injector: Split 5:1 with glass lined split liner, 250°C
Temperature program: 40°C ( 1 min) @6°C/min to 120°C, @15°C to 245 °C (5 min)
Carrier: Helium 5.0, 40 cm/s linear velocity, constant flow
MS: Single quadrupole, direct interface, 220°C inter face temperature
Acquisition: SIM scan mode
Scan parameter: 46-250 amu 6.6 scans/s
SIM Parameter: m/z 60.74, 6.6 scans/s

**Table 2: Total fatty acid content in Dipolen (Blend (A))**

| | |
|---|---|
| Sample | Total fatty acid concentration [mg/ kg]^{[1]} |
| Dipolen S | 70.6 |
| ^{[1]}The concentration of acetic acid, propionic acid, butyric acid, pentanoic acid, hexanoic acid octanoic acid, nonanoic acid and decanoic acid in each sample was added together to give a totally fatty acid concentration value. | |

### Experiments

A number of blends were produced with DIPOLEN S as blend (A), a polyethylene-polypropylene blend from Mtm Plastics GmbH, materials according to the August 2018 specifications.

In each of the blends 5 to 10 wt.-% of a reactor-derived compatibilizer (B) was added. As compatibilizer (B) the following commercially available terpolymers were used:

**Table 3: Properties of the compatibilizers (B)**

| **Compatibilizer** | | **B1** | **B2** (not part of the claimed invention) |
|---|---|---|---|
| | | Tafmer PN 0040 | Tafmer PN 20300 |
| MFR | [g/10 min] | 4.0 | 30.0 |
| Tm | [°C] | 160 | 160 |
| Tg | [°C] | -16 | -26 |
| Density | [kg/m³] | 868 | 868 |
| C2 | [wt.-%] | 4.7 | 19.9 |
| C4 | [wt.-%] | 8.9 | 7.1 |

The compositions were prepared via melt blending on a co-rotating twin screw extruder with 0.3 wt.-% Irganox B225F (AO) as stabilizer. The polymer melt mixture was discharged and pelletized. For testing the mechanical properties, specimens were produced and tested according to ISO 179 with 1eA notched specimens to measure the Charpy notched impact strength (NIS) and according to ISO 527-1/2 with 1A specimens to measure the tensile properties at room temperature. The results are summarized in Table 4.

**Table 4: Composition and properties of the inventive and comparative examples**

| | | **CE1** | **IE1** | **IE2** | **IE3*** | **IE4*** |
|---|---|---|---|---|---|---|
| A | [wt.-%] | 99.7 | 94.7 | 89.7 | 94.7 | 89.7 |
| B1 | [wt.-%] | - | 5 | 1.0 | - | - |
| B2 | [wt.-%] | - | - | - | 5 | 10 |
| AO | [wt.-%] | 0.3 | 0.3 | 0.3 | 0.3 | 0.3 |
| NIS | [kJ/m²] | 5.7 | 6.8 | 8.9 | 6.4 | 8.2 |
| TM | [MPa] | 850 | 736 | 640 | 755 | 641 |

| | | | | | | |
|---|---|---|---|---|---|---|
| * not according to the claimed subject matter | | | | | | |

As can be gathered from Table 4, the compositions according to the inventive examples have a higher impact strength than the reference which contains no compatibilizer while the tensile modulus remains on a high level.

## Claims

1. Polyethylene-polypropylene composition, obtainable by blending
a) 85.0 to 99.0 wt.-%, based on the overall weight of the polyethylene-polypropylene composition, of a blend (A) comprising
i) polypropylene, and
ii) polyethylene,
wherein the weight ratio of polypropylene to polyethylene is in the range of 3:7 to 7:3, and
wherein blend (A) is a recycled material, which is recovered from a waste plastic material derived from post-consumer waste;
and
b) 1.0 to 15.0 wt.-%, based on the overall weight of the polyethylene-polypropylene composition, of a compatibilizer (B) being a C₂C₃C₄ terpolymer having a density determined according to ISO 1183 equal or below 880 kg/m³, preferably in the range of 850 to 875 kg/m³, more preferably in the range of 855 to 872 kg/m³, still more preferably in the range of 860 to 870 kg/m³,
wherein the C₂C₃C₄ terpolymer has
i) an ethylene content in the range of 2.0 to 15.0 wt.-%, and
ii) a 1-butene content in the range of 5.0 to 30.0 wt.-%, based on the overall weight of the C₂C₃C₄ terpolymer.

2. Polyethylene-polypropylene composition according to claim 1, wherein the C₂C₃C₄ terpolymer has a melt flow rate MFR₂ (230 °C, 2.16 kg) determined according to ISO 1133 in the range of 2.0 to 40.0 g/10 min, preferably in the range of 3.0 to 38.0 g/10 min, more preferably in the range of 3.5 to 35.0 g/10 min, still more preferably in the range of 4.0 to 30.0 g/10 min.

3. Polyethylene-polypropylene composition according to claim 1 or 2, wherein the weight ratio between the blend (A) and the compatibilizer (B) is in the range of 99:1 to 5:1, preferably in the range of 49:1 to 7:1, more preferably in the range of 32:1 to 8:1, still more preferably in the range of 19:1 to 9:1.

4. Polyethylene-polypropylene composition according to any one of the preceding claims, wherein the C₂C₃C₄ terpolymer has a melting temperature Tm determined according to ISO 11357 below 180°C, preferably in the range of 120 to below 180 °C, more preferably in the range of 140 to 170 °C, still more preferably in the range of 150 to 165 °C.

5. Polyethylene-polypropylene composition according to any one of the preceding claims, wherein the C₂C₃C₄ terpolymer has a glass transition temperature Tg below -5 °C, preferably in the range of -30 to below -5 °C, more preferably in the range of -27 to -10°C, still more preferably the range of -25 to -12 °C.

6. Polyethylene-polypropylene composition according to any one of the preceding claims, wherein blend (A) has a content of limonene as determined by using solid phase microextraction (HS-SPME-GC-MS) of
(i) from 1 ppm to 100 ppm, preferably from 1 ppm to 50 ppm, more preferably from 2 ppm to 50 ppm, most preferably from 3 ppm to 35 ppm; or
(ii) from 0.10 ppm to less than 1 ppm, preferably 0.10 to less than 0.85 ppm, most preferably 0.10 to less than 0.60 ppm.

7. Polyethylene-polypropylene composition according to any one of the preceding claims, wherein blend (A) has a relative amount of units derived from ethylene of greater than 20 wt.-%, based on the overall weight of blend (A).

8. Polyethylene-polypropylene composition according to any one of the preceding claims, wherein blend (A) contains
i) up to 6.0 wt.-%, preferably 0.1 to 6.0 wt.-% polystyrene, and/or
ii) up to 3 wt.-%, preferably 0.1 to 3 wt.-% talc, and/or
iii) up to 5.0 wt.-%, preferably 0.2 to 5.0 wt.-% polyamide, and/or
iv) up to 3 wt.-%, preferably 0.1 to 3 wt.-% chalk,
based on the overall weight of blend (A).

9. Polyethylene-polypropylene composition according to any one of the preceding claims, having a melt flow rate MFR₂ (230 °C, 2.16 kg) determined according to ISO 1133 in the range of 0.1 to 50.0 g/10 min.

10. Polyethylene-polypropylene composition according to any one of the preceding claims, having a Charpy notched impact strength determined according to ISO 179 / 1eA at 23 °C of at least 6.0 kJ/m², preferably in the range of 6.0 to 15.0 kJ/m², more preferably in the range of 7.0 to 10.0 kJ/m², still more preferably in the range of 8.0 to 9.0 kJ/m².

11. Polyethylene-polypropylene composition according to any one of the preceding claims, having a tensile modulus determined according to ISO 527-2 of at least 600 MPa, preferably in the range of 600 to 830 MPa, more preferably in the range of 620 to 800 MPa, still more preferably in the range of 640 to 760 MPa.

12. Article, comprising the polyethylene-polypropylene composition according to any one of claims 1 to 11.

13. Process for preparing the polyethylene-polypropylene composition according to any one of claims 1 to 11, comprising the steps of
a) providing the blend (A) in an amount of 85.0 to 99.0 wt.-%, based on the overall weight of the polyethylene-polypropylene composition,
b) providing the compatibilizer (B) in an amount of 1.0 to 15.0 wt.-%, based on the overall weight of the polyethylene-polypropylene composition,
c) melting and mixing the blend of blend (A) and the compatibilizer (B), optionally in the presence of 0 to 1.0 wt.-% of a stabilizer or a mixture of stabilizers, and
d) optionally pelletizing.

## Patentansprüche

1. Polyethylen-Polypropylen-Zusammensetzung, erhältlich durch Mischen von
a) 85,0 bis 99,0 Gew.-%, bezogen auf das Gesamtgewicht der Polyethylen-Polypropylen-Zusammensetzung, eines Gemisches (A), umfassend
i) Polypropylen, und
ii) Polyethylen,
wobei das Gewichtsverhältnis von Polypropylen zu Polyethylen im Bereich von 3:7 bis 7:3 liegt, und
wobei Gemisch (A) ein recyceltes Material ist, das aus einem Kunststoffabfallmaterial gewonnen wird, das aus Post-Verbraucherabfällen stammt;
und
b) 1,0 bis 15,0 Gew.-%, bezogen auf das Gesamtgewicht der Polyethylen-Polypropylen-Zusammensetzung, eines Kompatibilisierungsmittels (B), nämlich ein C₂C₃C₄-Terpolymer mit einer Dichte, bestimmt gemäß ISO 1183, von gleich oder unter 880 kg/m³, vorzugsweise im Bereich von 850 bis 875 kg/m³, bevorzugter im Bereich von 855 bis 872 kg/m³, noch bevorzugter im Bereich von 860 bis 870 kg/m³,
wobei das C₂C₃C₄-Terpolymer aufweist:
i) einen Ethylen-Gehalt im Bereich von 2,0 bis 15,0 Gew.-%, und
ii) einen 1-Buten-Gehalt im Bereich von 5,0 bis 30,0 Gew.-%, bezogen auf das Gesamtgewicht des C₂C₃C₄-Terpolymers.

2. Polyethylen-Polypropylen-Zusammensetzung nach Anspruch 1, wobei das C₂C₃C₄-Terpolymer eine Schmelzefließrate MFR₂ (230°C, 2,16 kg), bestimmt gemäß ISO 1133, im Bereich von 2,0 bis 40,0 g/10 min, vorzugsweise im Bereich von 3,0 bis 38,0 g/10 min, bevorzugter im Bereich von 3,5 bis 35,0 g/10 min, noch bevorzugter im Bereich von 4,0 bis 30,0 g/10 min aufweist.

3. Polyethylen-Polypropylen-Zusammensetzung nach Anspruch 1 oder 2, wobei das Gewichtsverhältnis zwischen dem Gemisch (A) und dem Kompatibilisierungsmittel (B) im Bereich von 99:1 bis 5:1, vorzugsweise im Bereich von 49:1 bis 7:1, bevorzugter im Bereich von 32:1 bis 8:1, noch bevorzugter im Bereich von 19:1 bis 9:1 liegt.

4. Polyethylen-Polypropylen-Zusammensetzung nach einem der vorangehenden Ansprüche, wobei das C₂C₃C₄-Terpolymer eine Schmelztemperatur Tm, bestimmt gemäß ISO 11357, unter 180°C, vorzugsweise im Bereich von 120 bis unter 180°C, bevorzugter im Bereich von 140 bis 170°C, noch bevorzugter im Bereich von 150 bis 165°C aufweist.

5. Polyethylen-Polypropylen-Zusammensetzung nach einem der vorangehenden Ansprüche, wobei das C₂C₃C₄-Terpolymer eine Glasübergangstemperatur Tg unter - 5°C, vorzugsweise im Bereich von -30 bis unter -5°C, bevorzugter im Bereich von -27 bis -10°C, noch bevorzugter im Bereich von -25 bis -12°C aufweist.

6. Polyethylen-Polypropylen-Zusammensetzung nach einem der vorangehenden Ansprüche, wobei das Gemisch (A) einen Gehalt an Limonen, bestimmt unter Verwendung von Festphasenmikroextraktion (HS-SPME-GC-MS), aufweist von (i) von 1 ppm bis 100 ppm, vorzugsweise von 1 ppm bis 50 ppm, bevorzugter von 2 ppm bis 50 ppm, besonders bevorzugt von 3 ppm bis 35 ppm; oder (ii) von 0,10 ppm bis weniger als 1 ppm, vorzugsweise 0,10 bis weniger als 0,85 ppm, besonders bevorzugt 0,10 bis weniger als 0,60 ppm.

7. Polyethylen-Polypropylen-Zusammensetzung nach einem der vorangehenden Ansprüche, wobei Gemisch (A) eine relative Menge an von Ethylen abgeleiteten Einheiten von mehr als 20 Gew.-%, bezogen auf das Gesamtgewicht von Gemisch (A), aufweist.

8. Polyethylen-Polypropylen-Zusammensetzung nach einem der vorangehenden Ansprüche, wobei das Gemisch (A) enthält
i) bis zu 6,0 Gew.-%, vorzugsweise 0,1 bis 6,0 Gew.-% Polystyrol, und/oder
ii) bis zu 3 Gew.-%, vorzugsweise 0,1 bis 3 Gew.-% Talkum, und/oder
iii) bis zu 5,0 Gew.-%, vorzugsweise 0,2 bis 5,0 Gew.-% Polyamid, und/oder
iv) bis zu 3 Gew.-%, vorzugsweise 0,1 bis 3 Gew.-% Kreide,
bezogen auf das Gesamtgewicht von Gemisch (A).

9. Polyethylen-Polypropylen-Zusammensetzung nach einem der vorangehenden Ansprüche mit einer Schmelzefließrate MFR₂ (230°C, 2,16 kg), bestimmt gemäß ISO 1133, im Bereich von 0,1 bis 50,0 g/10 min.

10. Polyethylen-Polypropylen-Zusammensetzung nach einem der vorangehenden Ansprüche mit einer Kerbschlagzähigkeit nach Charpy, bestimmt gemäß ISO 179 / 1eA bei 23°C, von mindestens 6,0 kJ/m², vorzugsweise im Bereich von 6,0 bis 15,0 kJ/m², bevorzugter im Bereich von 7,0 bis 10,0 kJ/m², noch bevorzugter im Bereich von 8,0 bis 9,0 kJ/m².

11. Polyethylen-Polypropylen-Zusammensetzung nach einem der vorangehenden Ansprüche mit einem Zugmodul, bestimmt gemäß ISO 527-2, von mindestens 600 MPa, vorzugsweise im Bereich von 600 bis 830 MPa, bevorzugter im Bereich von 620 bis 800 MPa, noch bevorzugter im Bereich von 640 bis 760 MPa.

12. Gegenstand, umfassend die Polyethylen-Polypropylen-Zusammensetzung nach einem der Ansprüche 1 bis 11.

13. Verfahren zur Herstellung der Polyethylen-Polypropylen-Zusammensetzung nach einem der Ansprüche 1 bis 11, umfassend die Schritte von
a) Bereitstellung des Gemisches (A) in einer Menge von 85,0 bis 99,0 Gew.-%, bezogen auf das Gesamtgewicht der Polyethylen-Polypropylen-Zusammensetzung,
b) Bereitstellung des Kompatibilisierungsmittels (B) in einer Menge von 1,0 bis 15,0 Gew.-%, bezogen auf das Gesamtgewicht der Polyethylen-Polypropylen-Zusammensetzung,
c) Schmelzen und Mischen des Gemisches aus Gemisch (A) und dem Kompatibilisierungsmittel (B), gegebenenfalls in Gegenwart von 0 bis 1,0 Gew.-% eines Stabilisators oder eines Gemisches von Stabilisatoren, und
d) gegebenenfalls Pelletierung.

## Revendications

1. Composition de polyéthylène-polypropylène, pouvant être obtenue par mélange de
a) 85,0 à 99,0 % en poids, basés sur le poids total de la composition de polyéthylène-polypropylène, d'un mélange (A) comprenant
i) du polypropylène, et
ii)du polyéthylène,
dans laquelle le rapport en poids du polypropylène sur le polyéthylène est dans la plage de 3/7 à 7/3, et
dans laquelle le mélange (A) est un matériau recyclé, qui est récupéré à partir de déchets de matières plastiques dérivés de déchets de consommation ; et
b) 1,0 à 15,0 % en poids, basés sur le poids total de la composition de polyéthylène-polypropylène, d'un agent de compatibilité (B) qui est un terpolymère C₂C₃C₄ ayant une masse volumique, déterminée conformément à la norme ISO 1183, égale ou inférieure à 880 kg/m³, de préférence dans la plage de 850 à 875 kg/m³, plus préférablement dans la plage de 855 à 872 kg/m³, encore plus préférablement dans la plage de 860 à 870 kg/m³,
dans laquelle le terpolymère C₂C₃C₄ a
i) une teneur en éthylène dans la plage de 2,0 à 15,0 % en poids, et
ii) une teneur en 1-butène dans la plage de 5,0 à 30,0 % en poids,
basées sur le poids total du terpolymère C₂C₃C₄.

2. Composition de polyéthylène-polypropylène selon la revendication 1, dans laquelle le terpolymère C₂C₃C₄ a un indice de fluage MFR₂ (230°C, 2,16 kg), déterminé conformément à la norme ISO 1133, dans la plage de 2,0 à 40,0 g/10 min, de préférence dans la plage de 3,0 à 38,0 g/10 min, plus préférablement dans la plage de 3,5 à 35,0 g/10 min, encore plus préférablement dans la plage de 4,0 à 30,0 g/10 min.

3. Composition de polyéthylène-polypropylène selon la revendication 1 ou 2, dans laquelle le rapport en poids entre le mélange (A) et l'agent de compatibilité (B) est dans la plage de 99/1 à 5/1, de préférence dans la plage de 49/1 à 7/1, plus préférablement dans la plage de 32/1 à 8/1, encore plus préférablement dans la plage de 19/1 à 9/1.

4. Composition de polyéthylène-polypropylène selon l'une quelconque des revendications précédentes, dans laquelle le terpolymère C₂C₃C₄ a un point de fusion Tm, déterminé conformément à la norme ISO 11357, inférieur à 180°C, de préférence dans la plage de 120 à moins de 180°C, plus préférablement dans la plage de 140 à 170°C, encore plus préférablement dans la plage de 150 à 165°C.

5. Composition de polyéthylène-polypropylène selon l'une quelconque des revendications précédentes, dans laquelle le terpolymère C₂C₃C₄ a une température de transition vitreuse Tg inférieure à -5°C, de préférence dans la plage de -30 à moins de -5°C, plus préférablement dans la plage de -27 à -10°C, encore plus préférablement dans la plage de -25 à -12°C.

6. Composition de polyéthylène-polypropylène selon l'une quelconque des revendications précédentes, dans laquelle le mélange (A) a une teneur en limonène, telle que déterminée par utilisation d'une micro-extraction en phase solide (HS-SPME-GC-MS), de
(i) 1 ppm à 100 ppm, de préférence 1 ppm à 50 ppm, plus préférablement 2 ppm à 50 ppm, le plus préférablement 3 ppm à 35 ppm ; ou
(ii) 0,10 ppm à moins de 1 ppm, de préférence 0,10 à moins de 0,85 ppm, le plus préférablement 0,10 à moins de 0,60 ppm.

7. Composition de polyéthylène-polypropylène selon l'une quelconque des revendications précédentes, dans laquelle le mélange (A) a une quantité relative de motifs dérivés d'éthylène supérieure à 20 % en poids, basée sur le poids total du mélange (A).

8. Composition de polyéthylène-polypropylène selon l'une quelconque des revendications précédentes, dans laquelle le mélange (A) contient
i) jusqu'à 6,0 % en poids, de préférence 0,1 à 6,0 % en poids de polystyrène, et/ou
ii) jusqu'à 3 % en poids, de préférence 0,1 à 3 % en poids de talc, et/ou
iii) jusqu'à 5,0 % en poids, de préférence 0,2 à 5,0 % en poids de polyamide, et/ou
iv) jusqu'à 3 % en poids, de préférence 0,1 à 3 % en poids de craie,
basés sur le poids total du mélange (A).

9. Composition de polyéthylène-polypropylène selon l'une quelconque des revendications précédentes, ayant un indice de fluage MFR₂ (230°C, 2,16 kg), déterminé conformément à la norme ISO 1133, dans la plage de 0,1 à 50,0 g/10 min.

10. Composition de polyéthylène-polypropylène selon l'une quelconque des revendications précédentes, ayant une résistance au choc Charpy sur barreau entaillé, déterminée conformément à la norme ISO 179/1eA à 23°C, d'au moins 6,0 kJ/m², de préférence dans la plage de 6,0 à 15,0 kJ/m², plus préférablement dans la plage de 7,0 à 10,0 kJ/m², encore plus préférablement dans la plage de 8,0 à 9,0 kJ/m².

11. Composition de polyéthylène-polypropylène selon l'une quelconque des revendications précédentes, ayant un module de traction, déterminé conformément à la norme ISO 527-2, d'au moins 600 MPa, de préférence dans la plage de 600 à 830 MPa, plus préférablement dans la plage de 620 à 800 MPa, encore plus préférablement dans la plage de 640 à 760 MPa.

12. Article comprenant la composition de polyéthylène-polypropylène selon l'une quelconque des revendications 1 à 11.

13. Procédé pour préparer la composition de polyéthylène-polypropylène selon l'une quelconque des revendications 1 à 11, comprenant les étapes de
a) fourniture du mélange (A) en une quantité de 85,0 à 99,0 en poids, basée sur le poids total de la composition de polyéthylène-polypropylène,
b) fourniture de l'agent de compatibilité (B) en une quantité de 1,0 à 15,0 % en poids, basée sur le poids total de la composition de polyéthylène-polypropylène,
c) fusion et mélange de la combinaison du mélange (A) et de l'agent de compatibilité (B), optionnellement en présence de 0 à 1,0 % en poids d'un agent de stabilisation ou d'un mélange d'agents de stabilisation, et
d) optionnellement pastillage.
